# EUROPÄISCHE PATENTSCHRIFT

(11) **EP 0 791 553 B1**
(45) Veröffentlichungstag und Bekanntmachung des Hinweises auf die Patenterteilung: **24.05.2000**
(21) Anmeldenummer: 97101642.3
(22) Anmeldetag: 03.02.1997
(51) Int. Cl.: B65H 75/44

(54) **Bremsanordnung für eine in einem Gehäuse eingebaute selbstaufwickelnde Kabeltrommel**
Breaking device for a self-winding cable drum built into a housing
Dispositif de freinage pour enrouleur de câble à rappel automatique monté dans un carter

(30) Priorität: 26.02.1996 DE 19607146
(43) Veröffentlichungstag der Anmeldung: 27.08.1997
(73) Patentinhaber: BSH Bosch und Siemens Hausgeräte GmbH, 81669 München (DE)
(72) Erfinder: Lins, Felix, 97618 Niederlauer (DE); Prell, Manfred, 97702 Muennerstadt (DE)

(56) Entgegenhaltungen:
- BE-A- 424 812
- DE-A- 2 911 506

## Beschreibung

Die Erfindung betrifft eine Bremsanordnung für eine in einem Gehäuse eingebaute selbstaufwickelnde Kabeltrommel gemäß dem Oberbegriff des Anspruches 1.

Eine solche Bremsanordnung ist durch die DE-A- 29 11 506 bekannt. Bei dieser bekannten Bremsanordnung ist als Bremsglied eine mit einer Keilnut versehene Rolle vorgesehen, die mit an ihr angebrachten Achsstummeln in Kulissenschlitzen drehbar gelagert ist. Die Kulissenschlitze befinden sich in den Seitenwänden einer Kabelauslaßöffnung und sind in Auszugsrichtung des Kabels schräg ansteigend ausgebildet. Beim herausziehen des Kabels wird die Rolle durch das Kabel in Auszugsrichtung etwas mitgenommen und wird dabei infolge des schräg ansteigenden Verlaufes der Kulissenschlitze gegenüber dem Kabel etwas angehoben. Damit verliert die Rolle ihre Bremswirkung und das Kabel kann von Kabeltrommel abgezogen werden. Nach Beendigung des Abziehvorganges und Loslassen des Kabels kommt die Aufwickelkraft der Kabeltrommel zur Wirkung, die das Kabel wieder aufzuwickeln versucht. Durch die Aufwickelbewegung des Kabels wird die Rolle in die Gegenrichtung bewegt und in infolge des schrägen Verlaufes der Kulissenschlitze nunmehr an das Kabel angedrückt, bis die Rolle das Kabel schließlich zwischen sich und der unteren Begrenzungswand der Kabelauslaßöffnung festklemmt. Um ein gewolltes Aufwickeln des Kabels auf die Kabeltrommel zu ermöglichen muß die Rolle durch einen gezielten Betätigungsvorgang von dem Kabel abgehoben werden. Ist die Kabeltrommel beispielsweise im Gehäuse eines Staubsaugers eingebaut, so muß ein gesondertes Löseelement am Staubsaugergehäuse vorgesehen werden, über das die Rolle aus ihrer Bremsstellung gelöst werden kann.

Durch die BE-A-424 812 ist ferner eine Einrichtung zum Blockieren eines Schlauches gegen ein selbstätiges Aufwickeln bekannt. Bei dieser Einrichtung wird der Schlauch sowohl beim Abwickeln als auch beim gewollten Aufwickeln in muldenartigen Vertiefungen zweier einander gegenübeliegenden Rollen geführt. Mindestens eine der Rollen ist exzentrisch gelagert. Beim gewünschten Blockieren des Schlauches gegen ein selbsttätiges Aufwickeln desselben, wird der Schlauch durch eine von einer Bedienperson ausgeübte seitlich gerichtete Zugkraft aus den muldenartigen Vertiefungen der Rollen heraus zu einem der Seitenbereiche der Rollen gezogen. Hierdurch tritt der Schlauch mit den Rollen in eine starke Reibverbindung. Nach dem Loslassen des Schlauches durch die Bedienperson bewegt sich derseibe durch die von der selsttätigen Aufwickelvorrichtung auf ihn ausgeübte Zugkraft in Aufwikkelrichtung. Dabei wird infolge der hohen Reibungskraft zwischen dem Schlauch und den Rollen die exzentrisch gelagerte Rolle in ihre Blockierstellung geschwenkt, wodurch der Schlauch gegen ein ungewolltes Aufwickeln festgeklemmt wird. Soll der Schlauch dagegen wieder aufgwickelt werden, dann wird er durch eine von der Bedienperson ausgeübte, der zuvor ausgeübten seitlichen Zugkraft entgegengerichtete seitliche Zugkraft wieder in die muldenartige Vertiefung der Rollen gezogen. Die Rollen können sich nunmehr wieder frei drehen und der Schlauch kann dadurch durch die selbsttätige Aufwickelvorrichtung aufgewickelt werden. Zum Verbringen des Schlauches in seine Blockierstellung und auch zum Lösen des Schlauches aus dieser Elockierstellung sind bei der bekannten Einrichtung relativ hohe Zugkräfte erforderlich, so daß zum einwandfreien Blockieren und Lösen des Schlauches eine stabile Anordnung der Einrichtung notwendig ist. d.h. die Einrichtung muß irgendwo fest montiert sein.

Der Erfindung liegt die Aufgabe zugrunde, bei einer in einem Staubsaugergehäuse eingebauten, selbstaufwickelnden Kabeltrommel die das selbsttätige Aufwickeln des Kabels blokkierende Bremsanordnung so zu gestalten, daß zum Lösen der Bremsstellung keine gesonderten Bauteile erforderlich sind und außerdem nur ein geringer Kraftaufwand notwendig ist.

Die Lösung der gestellten Aufgebe gelingt durch die im Kennzeichen des Anspruches 1 angegebenen Merkmale. Bei dieser Lösungsmöglichkeit dient das aufzuwikkelnde Kabel selbst als Löseelement zum Aufheben der Bremswirkung. Dabei ist zur Aufhebung der Bremswirkung nur ein geringer Kraftaufwand erforderlich, so daß auch ohne ein Festhalten des Staubsaugergehäuses das Kabel aus seiner jeweiligen Blockierstellung gezogen werden kann.

Bei der im Anspruch 1 beschriebenen Lösung wird die Bremsrolle durch einen nach oben gerichteten Kabelzug entsprechend angehoben und gibt dadurch das Kabel zum Aufwicheln frei.

Eine das Kabel für den Aufwickelvorgang freigebende Lageänderung der Bremsrolle ist durch eine entsprechende auf das Kabel ausgeübte Zugkraft dadurch möglich, daß die Kulissenschlitze in Bezug auf die Auszugsrichtung des Kabels zunächst gering ansteigend verlaufen und anschließend steil nach oben geführt sind.

Anhand eines in der Zeichnung dargestellten Ausführungsbeispieles wird die Erfindung nachfolgend noch näher erläutert.

Es zeigt:
- FIG 1: die Bremsstellung einer Bremsanordnung, bei der eine Bremsrolle in Kulissenschlitzen gelagert ist, die im Anschluß an einen flachen Anstieg einen steilen Anstieg aufweisen,
- FIG 2: die Lösestellung einer Bremsanordnung, bei der eine Bremsrolle in Kulissenschlitzen gelagert ist, die im Anschluß an einen flachen Anstieg einen steilen Anstieg aufweisen,
- FIG 3: eine Bremsanordnung mit einer Bremswalze, die in Richtung ihrer Achse zwei Bereiche mit unterschiedlichen Walzendurchmessern aufweist und
- FIG 4: eine Bremsanordnung im Schnitt entlang der Linie IV-IV in Fig.3.

Mit 1 ist eine Bremsanordnung bezeichnet. Eine solche Bremsanordnung kann direkt im Gehäuse einer in der Zeichnung nicht dargestellten selbstaufwickelnden Kabeltrommel oder davon getrennt beispielsweise im Gehäuse eines Staubsaugers eingebaut sein. In diesem Falle ist dann auch die Kabeltrommel im Staubsaugergehäuse angeordnet.

Die Bremsanordnung besteht aus einer Bremsrolle 2, die mit seitlich vorstehenden Achszapfen 3 in Kulissenschlitzen 4 drehbar gelagert ist. Die Kulissenschlitze 4 befinden sich in den Seitenwänden 5 einer an der Kabeltrommel selbst oder an dem Staubsaugergehäuse ausgebildeten Kabelauslaßöffnung 6.

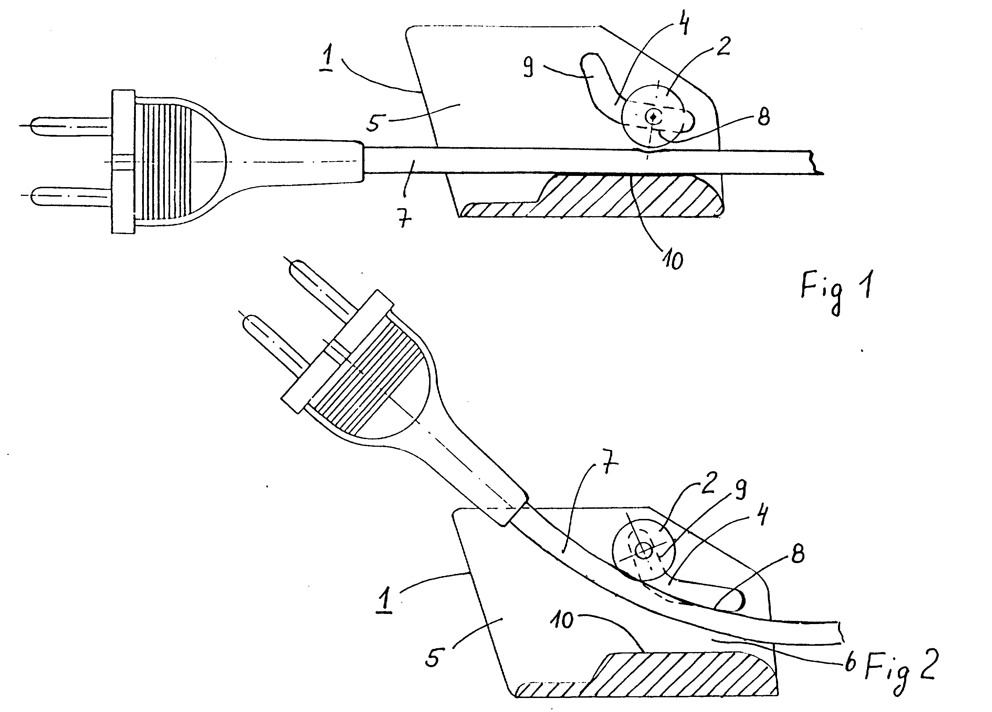

Bei dem Ausführungsbeispiel nach Fig. 1 und 2 weisen die Kulissenschlitze 4 in Auszugsrichtung eines auf der Kabeltrommel befindlichen Kabels 7 zunächst einen flach ansteigenden Verlauf 8 auf. Im Anschluß an diesen flachen Verlauf 8 sind die Kulissenschlitze 4 in einem weiteren Bereich 9 steil nach oben geführt.

Die in Fig. 1 und 2 gezeigte Bremsanordnung arbeitet wie folgt: Das Kabel 7 wird bei Bedarf von der Kabeltrommel abgezogen. Dabei wird die Bremsrolle 2 aus der in Fig.1 gezeigten Bremsstellung in Auszugsrichtung des Kabels 7 mitgenommen und wandert in den Kulissenschlitzen 4 ein kleines Stück in Abwickelrichtung des Kabels 7. Infolge des schräg ansteigenden Verlaufes 8 der Kulissenschlitze 4 wird die Bremsrolle 2 gegenüber dem Kabel 7 entsprechend angehoben, so daß das Kabel 7 zwischen der Bremsrolle 2 und der unteren Begrenzungswand 10 der Kabelauslaßöffnung 6 hindurchgezogen werden kann. Ist das Kabel 7 in der gewünschten Länge von der Kabeltrommel abgezogen, wird es losgelassen. Daraufhin setzt der selbsttätige Aufwickelvorgang durch die Kabeltrommel ein. Durch die einsetzende Aufwickelbewegung des Kabels 7 wird die Bremsrolle 2 wieder mitgenommen und wandert jetzt in den Kulissenschlitzen 4 in entgegengesetzter Richtung. Durch den schrägen Verlauf 8 der Kulissenschlitze 4 nähert sich die Bremsrolle 2 der unteren Begrenzungswand 10 der Kabelauslaßöffnung 6, so daß schließlich das Kabel 7 zwischen der Bremsrolle 2 und der Begrenzungswand 10 eingeklemmt wird. Damit kann die Kabeltrommel das Kabel 7 nicht weiter aufwickeln.

Soll das Kabel 7 nach Beendigung einer Arbeit wieder auf die Kabeltrommel aufgewickelt werden, wird das Kabel 7 ergriffen und ein Stückchen nach schräg oben gezogen. Hierdurch wird zunächst die Bremsrolle 2 aus ihrer Bremsstellung gelöst und durch das schräg nach oben geführte Kabel 7 in dem weiteren Bereich 9 der Kulissenschlitze 4 ebenfalls nach oben gedrängt. Durch die schräge Führung des Kabels 7 wird die Bremsrolle 2 in dem weiteren Bereich 9 der Kulissenschlitze 4 gehalten und kann nicht in die Bremsstellung zurück gleiten. Damit kann das Kabel 7 von der Kabeltrommel vollständig aufgewicklet werden. Ist das Kabel 7 vollständig aufgewickelt, wird diese losgelassen und nimmt wieder eine flache Lage ein. Damit gleitet auch die Bremsrolle 2 wieder aus dem weiteren Bereich 9 der Kulissenschlitze 4 in deren flach ansteigenden Verlauf 8, so daß das Kabel 7 wieder festgeklemmt wird.

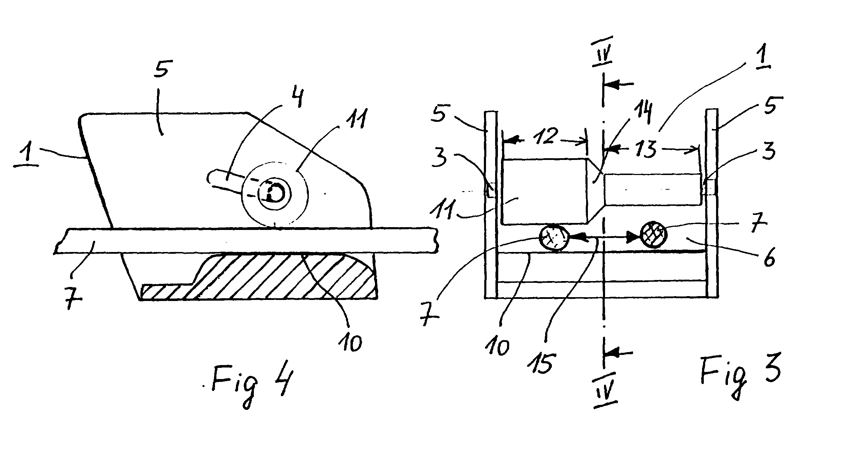

Bei der in Fig. 3 und 4 dargestellten Ausführungsvarianten der Bremsanordnung ist statt einer Bremsrolle 2 eine Bremswalze 11 vorgesehen, die ebenfalls in Kulissenschlitzen 4 gelagert ist. Die Bremswalze 11 weist in axialer Richtung in einem ersten und zweiten Bereich 12 und 13 unterschiedliche Durchmesser auf. Im ersten Bereich 12 ist der Durchmesser der Bremswalze 11 so bemessen, daß in diesem ersten Bereich 12 der Abstand zwischen dem Außenumfang der Bremswalze 11 und der Begrenzungswand 10 der Kabelauslaßöffnung 6 kleiner als der Außendurchmesser des Kabels 7 ist. Dagegen ist in dem zweiten Bereich 13 der Walzendurchmesser so gewählt, daß in diesem Bereich der Abstand zwischen dem Außenumfang der Bremswalze 11 und der Begrenzungswand 10 größer als der Außendurchmesser des Kabels 7 ist. Zwischen den beiden Bereichen 12 und 13 ist durch eine Schräge 14 ein kontinuierlicher Übergang von dem einen auf den anderen Durchmesser der Bremswalze 11 geschaffen.

Bei dieser Bremsanordnung kann das Kabel 7 durch seitlichen Zug, wie er durch einen Doppelpfeil 15 angedeutet ist, entweder in den ersten oder zweiten Bereich 12 bzw. 13 der Bremswalze 11 gezogen werden. Da in dem ersten Bereich 12 der Abstand zwischen der Bremswalze 11 und der Begrenzungswand 10 kleiner als der Kabelaußendurchmesser ist, wird das Kabel 7 folglich in diesem ersten Bereich zwischen der Bremswalze 11 und der Begrenzungswand 10 festgeklemmt und kann nicht aufgewickelt werden. Wird das Kabel 7 dagegen in den zweiten Bereich 13 gezogen, kann es von der Kabeltrommel aufgewickelt werden, da es frei zwischen der Bremswalze 11 und der Begrenzungswand 10 hindurchgleiten kann.

Wie die Fig.4 zeigt, können auch bei dieser Ausführungsvarianten der Bremsanordnung die Kulissenschlitze 4 einen schräg ansteigenden Verlauf aufweisen. Durch einen solchen Verlauf kann unabhängig von Fertigungstoleranzen bzw. Abnutzung von Teilen der Bremsanordnung die Bremswirkung der Anordnung sicher gestellt werden.

Die unterschiedlichen Durchmesserbereiche für das Festklemmen bzw. das Durchgleiten des Kabels 7 können auch mittels eines sich über die axiale Breite der Bremswalze 11 kontinuierlich ändernden Durchmesserverlaufes erreicht werden. Die Bremswalze 11 muß dann auf ihrer einen Seite einen solchen Durchmesser aufweisen, daß dort der Abstand zwischen der Bremswalze 11 und der Begrenzungswand 10 kleiner und auf der anderen Seite größer als der Kabelaußendurchmesser ist.

Bei der beschriebenen Bremsanordnung werden keine gesonderten Betätigungselemente mehr für ein Lösen der Bremse benötigt.

## Patentansprüche

1. Bremsanordnung für eine in einem Gehäuse, insbesondere Stausaugergehäuse, eingebaute, selbstaufwickelnde Kabeltrommel, welche Anordnung ein in einer im Gehäuse vorgesehenen Kabelauslaßöffnung (6) verstellbar angeordnetes und unter dem Einfluß der Aufwickelkraft eine Selbsthemmung bewirkendes Bremsglied (2) aufweist, dessen Bremswirkung zum Aufwickeln des Kabels (7) aufhebbar ist, **dadurch gekennzeichnet**, daß als Bremsglied eine mit ihren Achsenden beidseitig in Kulissenschlitzen (4) geführte Bremsrolle (2) vorgesehen ist, wobei die Kulissenschlitze (4) so gestaltet sind, daß die Bremsrolle (2) durch eine auf das Kabel (7) ausgeübte Zugkraft bewirkte Lageänderung des Kabels (7) in eine von ihrer in der Bremsstellung eingenommenen Lage abweichende Entriegelungsstellung bewegt und während des Aufwickelvorganges in dieser Entriegelungsstellung gehalten ist.

2. Bremsanordnung nach Anspruch 1, **dadurch gekennzeichnet**, daß die Kulissenschlitze (4) in Bezug auf die Auszugsrichtung des Kabels (7) zunächst gering ansteigend verlaufen und anschließend steil nach oben geführt sind.

## Claims

1. Brake arrangement for a self-winding cable drum installed in a housing, especially a vacuum cleaner housing, which arrangement comprises a braking element (2) which is adjustably arranged in a cable outlet opening (6) provided in a housing and effects a self-locking under the influence of the winding-up force and the braking action of which can be cancelled for the winding-up of the cable (7), characterised in that a braking roller (2) guided by its axle ends at both sides in guide slots (4) is provided as braking element, wherein the guide slots (4) are so shaped that braking roller (2) is moved into an unlocking setting, which departs from its position adopted in the braking setting, by positional change of the cable (7) caused by a tension force exerted on the cable (7) and is held in this unlocking setting during the winding-up process.

2. Brake arrangement according to claim 1, characterised in the guide slots (4) initially run to be slightly rising with respect to the extraction direction of the cable (7) and subsequently are guided steeply upwards.

## Revendications

1. Dispositif de freinage pour enrouleur de câble à rappel automatique monté dans un carter, notamment un carter d'aspirateur, lequel dispositif comprend un élément de freinage (2) situé dans une ouverture (6) de sortie de câble prévue dans le carter de manière à pouvoir être déplacé et causant un blocage automatique sous l'influence de la force d'enroulement, et dont l'action de freinage peut être supprimée pour l'enroulement du câble (7), caractérisé en ce que l'on prévoit, en tant qu'élément de freinage, une poulie de freinage (2) guidée sur les deux côtés dans des fentes de coulisse (4) par ses extrémités axiales, les fentes de coulisse (4) étant réalisées de manière à ce que la poulie de freinage (2) soit déplacée, sous l'effet d'un changement de position du câble (7) provoqué par une force de traction exercée sur le câble (7), dans une position de déverrouillage s'écartant de la position adoptée dans sa position de freinage et soit maintenue dans cette position de déverrouillage pendant l'opération d'enroulement.

2. Dispositif de freinage selon la revendication 1, caractérisé en ce que les fentes de coulisse (4) s'étendent d'abord en montant légèrement par rapport à la direction d'allongement du câble (7) et suivent ensuite une forte pente vers le haut.
